# EUROPÄISCHE PATENTSCHRIFT

(11) **EP 2 822 795 B1**
(45) Veröffentlichungstag und Bekanntmachung des Hinweises auf die Patenterteilung: **01.08.2018**
(21) Anmeldenummer: 13703415.3
(22) Anmeldetag: 11.02.2013
(51) Int. Cl.: B60K 20/02, B60W 50/08, F16H 59/10, B60K 6/48, F16H 59/08, B60W 20/00

(54) **VERFAHREN ZUM UMSCHALTEN EINES HYBRIDANTRIEBS VON EINEM BETRIEBSMODUS IN EINEN ANDEREN BETRIEBSMODUS BZW. HYBRIDFAHRZEUG**
METHOD FOR SWITCHING A HYBRID DRIVE FROM ONE OPERATING MODE TO ANOTHER OPERATING MODE AND HYBRID VEHICLE
PROCÉDÉ POUR LA COMMUTATION D'UNE PROPULSION HYBRIDE, D'UN MODE DE FONCTIONNEMENT À UN AUTRE MODE DE FONCTIONNEMENT, ET VÉHICULE HYBRIDE CORRESPONDANT

(30) Priorität: 07.03.2012 DE 102012203584
(43) Veröffentlichungstag der Anmeldung: 14.01.2015
(73) Patentinhaber: Bayerische Motoren Werke Aktiengesellschaft, 80809 München (DE)
(72) Erfinder: BAUMER, Klaus, 93138 Lappersdorf (DE); ROTHFUSS, Julian, 81735 München (DE)
(86) Internationale Anmeldenummer: PCT/EP2013/052632
(87) Internationale Veröffentlichungsnummer: WO 2013/131713

(56) Entgegenhaltungen:
- EP-A1- 2 492 161
- DE-A1- 10 059 279
- DE-A1- 10 157 393
- DE-A1-102009 026 788
- US-A- 5 885 187

## Beschreibung

Die vorliegende Erfindung betrifft ein Verfahren gemäß dem Oberbegriff des Patentanspruches 1 sowie ein Hybridfahrzeug gemäß dem Oberbegriff des Patentanspruches 2.

Ein Verfahren gemäß dem Oberbegriff des Patentanspruches 1 bzw. ein Hybridfahrzeug gemäß dem Oberbegriff des Patentanspruches 2 ist aus der D 10 2009 026 788 A1 bekannt. Zum technischen Hintergrund der Erfindung zählen die DE 101 57 393 A1, DE 100 59 279 A1 sowie die EP 2 492 161 A1.

Sogenannte "Voll-Hybrid-Fahrzeuge" zeichnen sich bekanntlich durch einen Antrieb aus, der einen Verbrennungsmotor und mindestens eine Vortrieb erzeugende elektrische Maschine aufweist. Ein Voll-Hybrid-Fahrzeug kann in unterschiedlichen Betriebsmodi betrieben werden, die sich nach dem "Verhältnis elektromotorisch erzeugter Antriebsleistung zu verbrennungsmotorisch erzeugter Antriebsleistung" unterscheiden. Das Fahrzeug kann beispielsweise in einem
- ersten Betriebsmodus ausschließlich verbrennungsmotorisch angetrieben werden,
- in einem zweiten (Hybrid-)Betriebsmodus verbrennungsmotorisch und gleichzeitig elektromotorisch oder
- in einem dritten Betriebsmodus rein elektromotorisch.

Bei herkömmlichen Hybridkonzepten hat der Fahrer die Möglichkeit, z. B. durch Drücken eines im Instrumententafelbereich vorgesehenen Tasters oder durch Anwählen einer entsprechenden Funktion in einem Auswahlmenü, einen bestimmten Betriebsmodus, wie z. B. "rein elektrisches Fahren", anzuwählen. Sofern die momentanen Fahrzustands- und/oder Fahrzeugparameter (z. B. Fahrzeuggeschwindigkeit, Ladezustand der Batterie etc.) dies gestatten, kann der Fahrer Weise aktiv, d.h. von sich aus in einen bestimmen Betriebsmodus wechseln. Sowohl das Drücken eines Tasters und insbesondere das Auswählen einer Funktion über eine eventuell relativ komplexe Menüstruktur erfordert je nach Fahrsituation allerdings eine hohe Aufmerksamkeit des Fahrers.

Aufgabe der Erfindung ist es, ein Verfahren zum Umschalten eines Hybridantriebs von einem Betriebsmodus in einen anderen Betriebsmodus und ein entsprechend konzipiertes Fahrzeug zu schaffen, bei dem das Umschalten möglichst intuitiv durch den Fahrer initiiert werden kann.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Ausgangspunkt der Erfindung ist ein Hybridfahrzeug mit einem Antrieb, der einen Verbrennungsmotor, mindestens eine Vortrieb erzeugende elektrische Maschine und ein Getriebe aufweist, das mittels einer von einem Fahrer zu betätigenden "Wähleinrichtung" in verschiedene Betriebszustände schaltbar ist. Die elektrische Maschine kann insbesondere so ausgelegt sein, dass auch ein rein elektrisches Fahren (d. h. ohne verbrennungsmotorischem Antrieb) möglich ist.

Der Hybridantrieb kann in mindestens zwei, vorzugsweise in mindestens drei verschiedenen Betriebsmodi betrieben werden, z. B.
- "rein verbrennungsmotorischer Antrieb",
- "Hybridantrieb" (d. h. gleichzeitig verbrennungsmotorischer und elektrischer Antrieb),
- rein elektrischer Antrieb.

Die einzelnen Betriebsmodi lassen sich nach dem "Verhältnis elektromotorischer erzeugter Antriebsleistung zu verbrennungsmotorisch erzeugter Antriebsleistung" unterscheiden. Bei rein verbrennungsmotorischem Antrieb ist naturgemäß der Anteil elektromotorischer erzeugter Antriebsleistung Null. Im Hybridbetrieb kann das Verhältnis elektromotorisch erzeugter Antriebsleistung zu verbrennungsmotorisch erzeugter Antriebsleistung in einem gewissen Bereich variieren. Bei rein elektromotorischem Antrieb ist naturgemäß der Anteil verbrennungsmotorischer Antriebsleistung Null.

Die Begriffe "Betriebsmodus" bzw. "Betriebsmodi" sind äußerst breit zu interpretieren. Alternativ zu dem oben beschriebenen Beispiel sind z.B. auch mehrere unterschiedliche Hybridbetriebsmodi denkbar. Die mindestens zwei Betriebsmodi müssen also nicht notwendigerweise einen rein elektromotorischen Antriebsmodus oder rein verbrennungsmotorischen Antriebsmodus umfassen.

Der "Antrieb" eines solchen Hybridfahrzeugs weist eine Vielzahl von Steuerungsparametern (einschließlich Randbedingungen), wie z. B. die von dem Verbrennungsmotor momentan zu erbringende Leistung, die von der elektrischen Maschine momentan zu erbringende Leistung, die von der elektrischen Maschine momentan zu rekuperierende Leistung, den Schaltzustand des Getriebes etc. auf, die von einer Antriebssteuerung (ein oder mehrere elektronische Steuergeräte mit entsprechender Software) gesteuert werden.

Die Antriebssteuerung steuert, vereinfacht gesprochen, den Antrieb in Abhängigkeit von einer von einem Fahrer über
- das "Gaselement" (z. B. Gaspedal) und
- die Getriebewähleinrichtung (z. B. Gangwahlhebel oder Gangwahlschalter) vorgegebene "Antriebsanforderung" und
in Abhängigkeit von verschiedenen Fahrzustands- und/oder Fahrzeugparametern bzw. Randbedingungen. Zu den Fahrzustandsparametern zählen beispielsweise die Fahrzeuggeschwindigkeit und/oder der Ladezustand des die elektrische Maschine versorgenden elektrischen Energiespeichers (Batterie bzw. Kondensatoranordnung).

Der Kern der Erfindung besteht darin, dass der "Antrieb" durch Betätigen eines ohnehin bereits im Fahrzeug vorhandenen Elements wie z.B. der Wähleinrichtung (z.B. Gangwahlschalter bzw. Getriebewählhebel), mittels der das Getriebe in seine verschiedenen Betriebszustände schaltbar ist, d.h. sehr einfach aktiv durch den Fahrer, von einem Betriebsmodus (z. B. dem Hybridbetriebsmodus) in einen anderen Betriebsmodus (z. B. den rein elektrischen Antriebsmodus) geschaltet werden kann. Der vom Fahrer gewählte Zustand bzw. die vom Fahrer gewählte Schaltstellung der Wähleinrichtung definiert somit den momentanen Betriebsmodus des Antriebs sofern, wie die momentan vorliegenden Fahrzustands- und/oder Fahrzeugparameter bzw. Randbedingungen dies zulassen.

Im Vergleich zu herkömmlichen Hybridfahrzeugen, bei denen ein Umschalten von einem Betriebsmodus in einen anderen Betriebsmodus über einen im Bereich der Instrumententafel oder am Lenkrad vorgesehenen Taster, Schalter oder durch Anwählen einer Funktion aus einer Softwaremenüstruktur erfolgt, ist ein (bloßes) Betätigen der Wähleinrichtung, mittels der auch die einzelnen Betriebszustände des Getriebes anwählbar sind, absolut intuitiv möglich, ohne dass der Fahrer seinen Blick von der Straße abwenden muss. Dieser vermeintlich klein erscheinende Unterschied gegenüber herkömmlichen Hybridfahrzeugen ist aus ergonomischer Sicht höchst vorteilhaft und wirkt sich unmittelbar positiv auf die Fahrerakzeptanz bei Hybridfahrzeugen aus.

Gemäß der Erfindung befindet sich der Antrieb in einem ersten Betriebsmodus, wenn sich die Wähleinrichtung in einem ersten (stabilen) Zustand befindet, und in einem zweiten Betriebsmodus, wenn sich die Wähleinrichtung in einem zweiten (stabilen) Zustand befindet. Bei den stabilen Zuständen kann es sich beispielsweise um definierte Schaltstellungen handeln, die ein Wählhebel, über den das Getriebe ansteuerbar ist, einnehmen kann.

Es sei ausdrücklich darauf hingewiesen, dass die Erfindung ein vom Fahrer initiiertes Umschalten zwischen einzelnen Betriebsmodi vorsieht bzw. ermöglicht, was jedoch nicht ausschließt, dass die Antriebssteuerung in bestimmten Situationen automatisch, d. h. ohne Einwirkung des Fahrers von einem Betriebsmodus in einen anderen Betriebsmodus umschaltet.

Bei einem durch die Antriebssteuerung initiierten Umschalten des Antriebs von einem Betriebsmodus in einen anderen Betriebsmodus, z. B. bei einem Umschalten von rein elektromotorischem Antrieb auf Hybridantrieb oder auf rein verbrennungsmotorischen Antrieb, ist erfindungsgemäss vorgesehen dass dabei die Wähleinrichtung ebenfalls "automatisch", d. h. ohne Zutun des Fahrers umgeschaltet wird. "Automatisch" bedeutet in diesem Zusammenhang, dass die Wähleinrichtung durch die Fahrzeugelektronik (Antriebssteuerung) umgeschaltet wird. Aus der Schaltstellung der Wähleinrichtung und eines gegebenenfalls mit dem Umschalten der Wähleinrichtung verbundenen Schaltgeräuschs bekommt der Fahrer somit unmittelbar eine optische bzw. haptische und/oder eine akustische Rückmeldung über den (automatisch vorgenommenen) Wechsel des Betriebsmodus.

Zusätzlich kann bei einem solchen Umschaltvorgang z. B. in einem Instrumentenkombi, über ein zentral im Bereich der Instrumententafel angeordnetes Display und/oder über ein sogenanntes Headup-Display ein Wechsel des Betriebsmodus angezeigt werden.

Ferner kann an der Wähleinrichtung (z. B. am Wählhebel) oder an einer andere Stelle im Sichtbereich des Fahrers eine optische Statusanzeige (z. B. LED o. ä.) vorgesehen sein, welche den momentan ausgewählten Betriebsmodus anzeigt.

Ein automatisches Umschalten vom rein verbrennungsmotorischen Antrieb in einen Hybridmodus oder in einen rein verbrennungsmotorischen Antriebsmodus kann vom Fahrer z. B. auch durch Durchdrücken des Gaspedals ("Kickdown") initiiert werden. Der Antriebssteuerung wird ein entsprechendes Schaltsignal zugeführt. Die Antriebssteuerung wechselt daraufhin den Betriebsmodus, was mit einem automatischen Umschalten der Wähleinrichtung bzw. des Gangwählhebels einhergeht. Geht der Fahrerwunsch über die rein elektrische erreichbare Höchstgeschwindigkeit hinaus, kann ebenfalls ein automatisches Verlassen des rein elektrischen Antriebsmodus vorgesehen sein.

Wie oben bereits erwähnt, kann es sich bei der Wähleinrichtung um einen schwenkbar oder kippbar angeordneten Wählhebel handeln, ähnlich dem Wählhebel, wie er bei herkömmlichen Fahrzeugen mit Automatikgetriebe der Marke BMW anzutreffen ist. Gemäß der vorliegenden Erfindung kann ein solcher Wählhebel mindestens zwei stabile Zustände bzw. Wählhebelpositionen einnehmen. Befindet sich der Antrieb in einem ersten Betriebsmodus (z. B. Hybridbetriebsmodus), so befindet sich der Wählhebel in einer zugeordneten ersten Wählhebelstellung. Befindet sich der Antrieb in einem zweiten Betriebsmodus (z. B. rein elektromotorischer Antrieb) so befindet sich der Wählhebel in einer sich von der ersten Wählhebelstellung unterscheidenden zweiten Wählhebelstellung.

Ferner kann vorgesehen sein, dass der Wählhebel eine dritte stabile Stellung einnehmen kann, aus der heraus das Getriebe durch Betätigen des Wählhebels in einer Schrittschaltgasse stufenweise in einen höheren oder in einen niedrigeren Gang geschaltet werden kann.

Selbstverständlich können auch mehre als drei stabile Wählhebelstellungen vorgesehen sein.

Ferner kann vorgesehen sein, dass ein stufenweises Schalten des Getriebes durch Betätigen des Wählhebels aus derjenigen Stellung heraus, in der sich der Antrieb in einem rein elektromotorischen Betriebsmodus befindet, unmöglich ist bzw. unterbunden wird.

Ist ein bestimmter Betriebsmodus (z. B. rein elektromotorischer Antrieb) bei den momentan gegebenen Fahrzustands- und/oder Fahrzeugparametern nicht möglich, kann vorgesehen sein, dass die entsprechende Auswahlstellung gesperrt ist, d. h. z. B. dass der Wählhebel in die dem betreffenden Betriebsmodus zugeordnete Stellung nicht bewegbar ist.

Alternativ dazu kann ein "Vormerken" des gewünschten Betriebsmodus ermöglicht werden, in dem die Wähleinrichtung zwar in die betreffende Auswahlstellung bewegt werden kann, ein Umschalten in den gewünschten Betriebsmodus jedoch verhindert wird, solange die momentan gegebenen Fahrzustands- und/oder Fahrzeugparameter dies noch nicht gestatten. Ein solcher "Vormerkzustand" kann z. B. durch ein Blinken einer Statusanzeige (LED o. ä.) angezeigt werden. Ein Wechsel in den "vorgemerkten Betriebsmodus" kann dann erfolgen, wenn die momentanen Fahrzustands-und/oder Fahrzeugparameter dies zulassen.

Beispielsweise kann vorgesehen sein, dass die drei stabilen Stellungen, welche der Wählhebel einnehmen kann, in einer Schaltgasse - in Fahrtrichtung betrachtet - hintereinander oder nebeneinander (in Fahrzeugquerrichtung hintereinander) liegen, wobei der Wählhebel ausgehend von der ersten stabilen Stellung, die z. B. einem Hybridbetriebsmodus entspricht, durch Bewegen des Wählhebels in eine erste Richtung in einen anderen Betriebsmodus (z. B. rein elektromotorischen Betrieb) geschaltet werden kann und durch Bewegen des Wählhebels in eine der ersten Richtung entgegengesetzte zweite Richtung oder in eine zur ersten Richtung senkrechte zweite Richtung in einen dritten Betriebsmodus (Sportbetrieb bzw. rein verbrennungsmotorischer Antrieb) geschaltet werden kann.

Im Folgenden wird die Erfindung im Zusammenhang mit der Zeichnung näher erläutert. Es zeigen:
- Figuren 1 - 3: verschiedene Wählhebel, über die einzelne Betriebsmodi des Antriebs anwählbar sind; und
- Figur 4: ein weiteres Schaltschema gemäß der Erfindung.

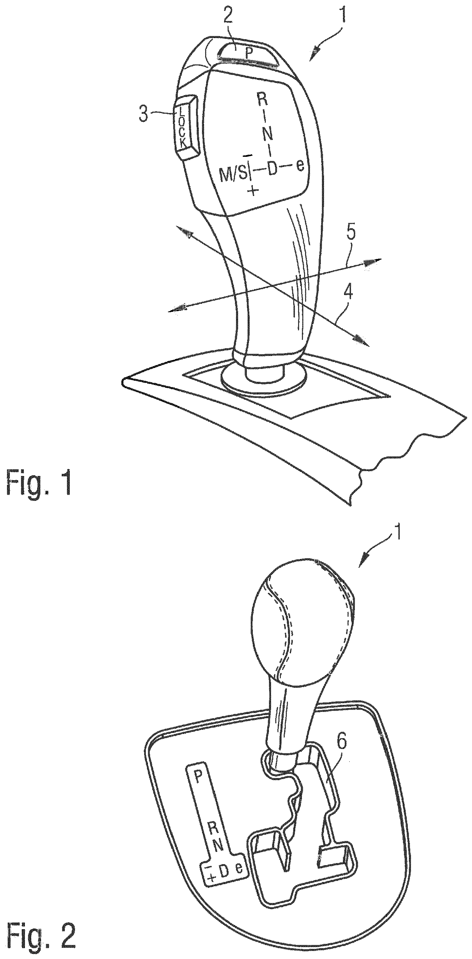

Figur 1 zeigt einen Wählhebel 1, ähnlich wie er bei herkömmlichen Fahrzeugen der Marke BMW verbaut ist. Der Wählhebel weist in seinem oberen Bereich einen Taster 2 mit der Aufschrift P auf. Wird der Taster 2 bei stehendem Fahrzeug oder bei mit nur geringer Geschwindigkeit rollendem Fahrzeug gedrückt, so wird die Parkbremse eingelegt. An der Seite des Wählhebels 1 befindet sich ein weiterer Taster 3 mit der Aufschrift "Lock". Ist die Parkbremse eingelegt und möchte man in den Fahrzustand wechseln, so muss zunächst die Bremse und gleichzeitig der Taster 3 gedrückt werden, anschließend kann der Wählhebel 2 in einer Fahrzeuglängsrichtung 4 verschwenkt werden.

Auf der dem Fahrer zugewandten Seite des Wählhebels ist schematisch eine Schaltkulisse mit den in Fahrzeuglängsrichtung 4 hintereinander liegenden Schaltpositionen "R" (Rückwärtsfahren), "N" (Neutral) bzw. Leerlauf, "D" Vorwärtsfahren) aufgetragen.

Bei einen Hybridfahrzeug repräsentiert der Schaltzustand "D" einen Hybridmodus, in dem das Fahrzeug, sofern die Fahrzustands- und/oder Fahrzeugparameter dies zulassen, gleichzeitig verbrennungsmotorisch und elektromotorisch angetrieben wird. Ferner kann vorgesehen sein, dass bei bestimmten Fahrzustands- und/oder Fahrzeugparametern das Fahrzeug auch im Zustand "D" rein elektromotorisch angetrieben wird, z. B. wenn sehr langsam gefahren wird (Geschwindigkeit kleiner als eine vorgegebenen Geschwindigkeit) und der Ladezustand des elektrischen Energiespeichers dies gestattet.

Durch Verschwenken des Wählhebels 1 nach rechts, d. h. in Fahrzeugquerrichtung kann, sofern die momentanen Fahrzustands- und/oder Fahrzeugparameter dies zulassen, in einen "e-Antriebsmodus" gewechselt werden, in dem das Fahrzeug ausschließlich elektromotorisch angetrieben wird.

Wählt der Fahrer den rein elektrischen Antriebsmodus, so kann vorgesehen sein, dass der Wählhebel 1 in der entsprechenden nach rechts ausgelenkten Stellung verbleibt. Verändern sich die Fahrzustands- und/oder Fahrzeugparameter so, dass ein rein elektrischer Fahrbetrieb nicht weiter möglich ist, so kann vorgesehen sein, dass eine Antriebssteuerung automatisch in den Hybridantriebsmodus zurückschaltet. Bei einem solchen automatisch gesteuerten Betriebsmoduswechsel kann vorgesehen sein, dass der Wählhebel automatisch aus seiner nach rechts ausgelenkten Wählhebelstellung in die mittlere Stellung nach links verschwenkt wird.

Ausgehend von dem Hybridantriebsmodus, welcher der Wählhebelstellung "D" entspricht, kann der Wählhebel 1 zusätzlich nach links in einen Sportantriebsmodus ausgelenkt werden. Ausgehend von dieser nach links ausgelenkten Wählhebelstellung, bei der es sich ebenfalls um eine stabile Wählhebelstellung handeln kann, kann das Getriebe durch Verschwenken des Wählhebels nach vorne oder entgegensetzt der Fahrtrichtung nach hinten manuell stufenweise heruntergeschaltet oder hochgeschaltet werden. Im "Sportmodus" kann vorgesehen sein, dass das Fahrzeug ausschließlich verbrennungsmotorisch oder primär verbrennungsmotorisch und nur unterstützend elektromotorisch (Boostfunktion) angetrieben wird.

Figur 2 zeigt ein alternatives Ausführungsbeispiel einer Wähleinrichtung 1, wobei eine echte mechanische Kulisse 6 innerhalb der der Wählhebel 1 bewegbar ist, vorgesehen ist. Auch hier können über den Wählhebel drei verschiedene Betriebsmodi angewählt werden, nämlich ein Sport- bzw. Schrittschaltmodus, gekennzeichnet durch die Symbole +/-, ein Hybrid-Fahrmodus, gekennzeichnet durch das Symbol D sowie ein rein elektrischer Antriebsmodus, gekennzeichnet durch das Symbol e.

Die in den Figuren 1 und 2 gezeigten Wählelemente sind, wie bei den meisten herkömmlichen Fahrzeugen, im Bereich der Mittelkonsole des Fahrgastraums angeordnet.

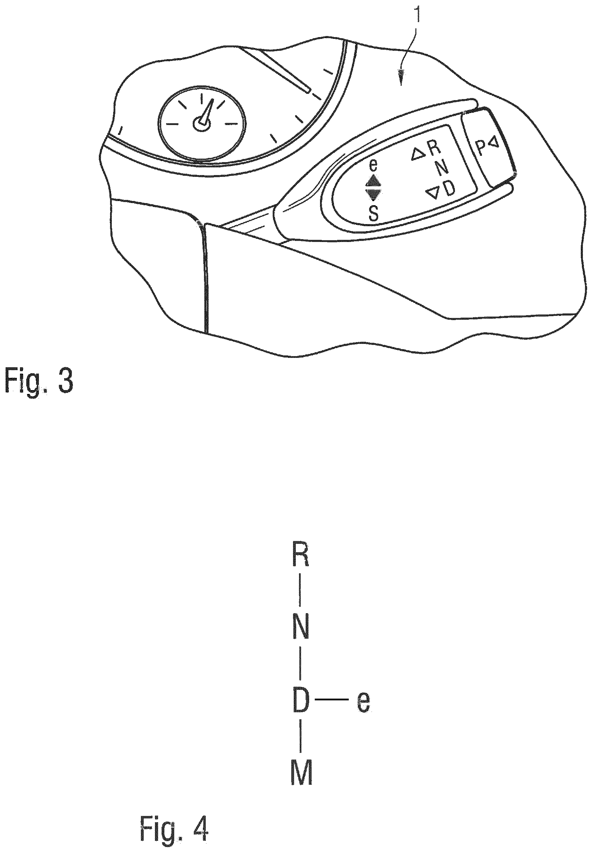

Alternativ dazu kann ein Wählhebel gemäß der Erfindung auch als Lenkstockhebel ausgebildet sein, der radial von der Drehachse des Lenkrads absteht. Ein derartiger Lenkstockhebel 1a ist in Figur 3 gezeigt.

Figur 4 zeigt ein Schaltschema für einen hier nicht dargestellten Wählhebel, wobei die den Betriebszuständen R (Rückwärtsfahren), N (Leerlauf bzw. Neutral), D (Vorwärtsfahren im Automatikmodus) und M (Vorwärtsfahren im manuellen Modus bzw. im Sportmodus) zugeordneten Wählhebelstellungen in einer Reihe (in Fahrrichtung des Fahrzeugs) hintereinander liegen. Die Wählhebelstellung zum Umschalten in den rein elektrischen Antriebsmodus zweigt an der Wählhebelstellung D nach senkrecht rechts von der "R-N-D-M Schaltgasse" ab.

## Patentansprüche

1. Verfahren zum Umschalten eines Antriebs eines Hybridfahrzeugs von einem Betriebsmodus in einen anderen Betriebsmodus, wobei
- der Antrieb einen Verbrennungsmotor, mindestens eine Vortrieb erzeugende elektrische Maschine und ein Getriebe, das mittels einer von einem Fahrer zu betätigenden Wähleinrichtung in verschiedene Betriebszustände schaltbar ist, aufweist,
- sich die Betriebsmodi nach dem Verhältnis elektromotorisch erzeugter Antriebsleistung zu verbrennungsmotorisch erzeugter Antriebsleistung unterscheiden lassen, und
- der Antrieb von einer Antriebssteuerung in Abhängigkeit von
- einer von einem Fahrer über
- ein Gaselement und
- die Wähleinrichtung (1)
vorgegebenen Antriebsanforderung und
- verschiedenen Fahrzustands- und/oder Fahrzeugparametern gesteuert wird, wobei
- der Antrieb durch Betätigen der Wähleinrichtung ' (1) von einem Betriebsmodus in einen anderen Betriebsmodus geschaltet wird,
**dadurch gekennzeichnet, dass** sich der Antrieb
- in einem ersten Betriebsmodus befindet, wenn sich die Wähleinrichtung (1) in einem ersten stabilen Zustand befindet, und
- in einem zweiten Betriebsmodus, wenn sich die Wähleinrichtung (1) in einem zweiten stabilen Zustand befindet, wobei
- die Wähleinrichtung (1) bei einem durch die Antriebssteuerung initiierten Umschalten des Antriebs von dem zweiten Betriebsmodus in den ersten Betriebsmodus ohne Zutun des Fahrers von dem zweiten stabilen Zustand in den ersten stabilen Zustand geschaltet wird.

2. Hybridfahrzeug, mit
- einem Antrieb, der einen Verbrennungsmotor, mindestens eine Vortrieb erzeugende elektrische Maschine und
- ein Getriebe aufweist, das mittels einer von einem Fahrer zu betätigenden Wähleinrichtung (1) in verschiedene Betriebszustände schalt bar ist,
wobei der Antrieb in mindestens zwei verschiedenen Betriebsmodi betreibbar ist, die sich nach dem Verhältnis elektromotorischer erzeugter Antriebsleistung zu verbrennungsmotorisch erzeugter Antriebsleistung unterscheiden lassen,
- einer Antriebssteuerung, welche den Antrieb in Abhängigkeit von
- einer von einem Fahrer über
- ein Gaselement und
- die Wähleinrichtung (1)
vorgegebenen Antriebsanforderung und
- verschiedenen Fahrzustands- und/oder Fahrzeugparametern steuert, wobei
- der Antrieb durch Betätigen der Wähleinrichtung von einem Betriebsmodus in einen anderen Betriebsmodus schaltbar ist,
**dadurch gekennzeichnet, dass** sich der Antrieb
- in einem ersten Betriebsmodus befindet, wenn sich die Wähleinrichtung (1) in einem ersten stabilen Zustand befindet, und
- in einem zweiten Betriebsmodus, wenn sich die Wähleinrichtung (1) in einem zweiten stabilen Zustand befindet, wobei
- die Wähleinrichtung bei einem durch die Antriebssteuerung initiierten Umschalten des Antriebs von dem zweiten Betriebsmodus in den ersten Betriebsmodus ohne Zutun des Fahrers von dem zweiten stabilen Zustand in den ersten stabilen Zustand geschaltet wird.

3. Fahrzeug nach Anspruch 2, **dadurch gekennzeichnet, dass** die Wähleinrichtung (1) einen schwenk- oder kippbar angeordneten Wählhebel (1) aufweist, wobei der erste stabile Zustand einer ersten stabilen Stellung des Wählhebels (1) und der zweite, stabile Zustand einer zweiten stabilen Stellung des Wählhebels (1) entspricht.

4. Fahrzeug nach einem der Ansprüche 2 oder 3, **dadurch gekennzeichnet, dass** der Antrieb in dem ersten Betriebsmodus in Abhängigkeit von verschiedenen Fahrzustands- und/oder Fahrzeugparametern allein von dem Verbrennungsmotor oder gleichzeitig von dem Verbrennungsmotor und der elektrischen Maschine angetrieben wird.

5. Fahrzeug nach einem der Ansprüche 2 bis 4, **dadurch gekennzeichnet, dass** der Antrieb in dem zweiten Betriebsmodus ausschließlich durch die elektrische Maschine angetrieben wird.

6. Fahrzeug nach einem der Ansprüche 3 bis 5, **dadurch gekennzeichnet, dass** der Wählhebel (1) in eine dritte stabile Stellung geschaltet werden kann, aus der heraus das Getriebe durch Betätigen des Wählhebels (1) in einer Schrittschaltgasse stufenweise in einen höheren oder niedrigeren Gang geschaltet werden kann.

7. Fahrzeug nach Anspruch 6, **dadurch gekennzeichnet, dass** ein stufenweises Schalten des Getriebes durch Betätigen des Wählhebels (1) aus der zweiten stabilen Stellung heraus unmöglich ist.

8. Fahrzeug nach einem der Ansprüche 6 oder 7, **dadurch gekennzeichnet, dass** die drei stabilen Stellungen in einer Schaltgasse des Wählhebels (1) hintereinander liegen, wobei der Wählhebel (1) ausgehend von der ersten stabilen Stellung
- durch Bewegen des Wählhebels (1) in eine erste Richtung in die zweite stabile Stellung geschaltet werden kann und
- durch Bewegen des Wählhebels (1) in eine der ersten Richtung entgegengesetzte zweite Richtung oder in eine zur ersten Richtung senkrechte zweite Richtung in die dritte stabile Stellung geschaltet werden kann.

## Claims

1. A method for switching a drive of a hybrid vehicle from one operating mode into another operating mode, wherein
- the drive has an internal combustion engine, at leastone propulsion-generating electric machine and a transmission which can be switched into various operating states by means of a selector means actuated by a driver,
- the operating modes can be distinguished according to the ratio of drive power generated by electric motorto drive power generated by internal combustion engine, and
- the drive is controlled by a drive control means dependent on
- a drive requirement specified by a driver by means of
- an accelerator element and
- the selector means (1) and
- various driving condition and/orvehicle parameters, wherein
- the drive is switched from one operating mode into another operating mode by actuating the selector means (1),
**characterised in that** the drive
- is in a first operating mode if the selector means (1) is in a first stable state, and
- in a second operating mode if the selector means (1) is in a second stable state, wherein
- the selector means (1), upon switching of the drive from the second operating mode into the first operating mode initiated by the drive control means, is switched from the second stable state into the first stable state without assistance from the driver.

2. A hybrid vehicle, having
- a drive, which has an internal combustion engine, at least one propulsion-generating electric machine and
- a transmission which can be switched into various operating states by means of a selector means (1) actuated by a driver,
wherein the drive is able to be operated in at least two different operating modes, which can be distinguished according to the ratio of drive power generated by electric motor to drive power generated by internal combustion engine,
- a drive control means which controls the drive dependent on
- a drive requirement specified by a driver by means of
- an accelerator element and
- the selector means (1)
and
- various driving condition and/or vehicle parameters, wherein
- the drive can be switched from one operating mode into another operating mode by actuating the selector means,
**characterised in that** the drive
- is in a first operating mode if the selector means (1) is in a first stable state, and
- in a second operating mode if the selector means (1) is in a second stable state, wherein
- the selector means, upon switching of the drive from the second operating mode into the first operating mode initiated by the drive control means, is switched from the second stable state into the first stable state without assistance from the driver.

3. A vehicle according to Claim 2, **characterised in that** the selector means (1) has a pivotably or tiltably arranged selector lever (1), wherein the first stable state corresponds to a first stable position of the selector lever (1) and the second stable state corresponding to a second stable position of the selector lever (1).

4. A vehicle according to one of Claims 2 or 3, **characterised in that** the drive in the first operating mode is driven solely by the internal combustion engine or simultaneously by the internal combustion engine and the electric machine, dependent on various driving condition and/or vehicle parameters.

5. A vehicle according to one of Claims 2 to 4, **characterised in that** the drive in the second operating mode is driven exclusively by the electric machine.

6. A vehicle according to one of Claims 3 to 5, **characterised in that** the selector lever(1) can be shifted into a third stable position, out of which the transmission can be shifted into a higher or lower gear in steps by actuating the selector lever (1) in a stepped shift gate.

7. A vehicle according to Claim 6, **characterised in that** step-wise shifting of the transmission by actuating the selector lever (1) out of the second stable position is impossible.

8. A vehicle according to one of Claims 6 or 7, **characterised in that** the three stable positions are arranged one after another in a shift gate of the selector lever (1), wherein the selector lever (1), starting from the first stable position,
- can be shifted into the second stable position by moving the selector lever (1) in a first direction and
- can be shifted into the third stable position by moving the selector lever (1) in a second direction opposite to the first direction or in a second direction perpendicular to the first direction.

## Revendications

1. Procédé permettant de commuter le système d'entraînement d'un véhicule hybride d'un mode de fonctionnement à un autre mode de fonctionnement selon lequel,
- le système d'entraînement comporte un moteur à combustion interne, au moins une machine électrique produisant une propulsion et une transmission pouvant être commutée dans différents états de fonctionnement, au moyen d'un dispositif de sélection devant être actionné par le conducteur,
- les modes de fonctionnement peuvent être distingués selon la proportion de la puissance d'entraînement produite par voie électromotorisée par rapport à la puissance d'entraînement produite par le moteur à combustion interne, et
- le système d'entraînement est commandé par une commande d'entraînement en fonction :
- d'une demande d'entraînement prédéfinie par le conducteur par l'intermédiaire,
- d'un élément de gaz, et
- du dispositif de sélection (1), et
- de différents paramètres d'état de roulement et/ou paramètres du véhicule,
- le système d'entraînement étant commuté par l'actionnement du dispositif de sélection (1) d'un mode de fonctionnement à un autre mode de fonctionnement,
**caractérisé en ce que**
le système d'entraînement,
- est situé dans un premier mode de fonctionnement lorsque le dispositif de sélection (1) se trouve dans un premier état stable, et
- est situé dans un second mode de fonctionnement lorsque le dispositif de sélection (1) se trouve dans un second état stable,
- lors d'une commutation amorcée par la commande de commutation du système d'entraînement du second mode de fonctionnement dans le premier mode de fonctionnement sans intervention du conducteur le dispositif de sélection (1) passant du second état stable dans le premier état stable.

2. Véhicule hybride, comprenant :
- un système d'entraînement qui comporte un moteur à combustion interne, au moins une machine électrique produisant une propulsion, et
- une transmission qui peut être commutée dans plusieurs états de fonctionnement au moyen d'un dispositif de sélection (1) actionné par le conducteur,
- le système d'entraînement pouvant fonctionner dans au moins deux modes de fonctionnement différents pouvant être distingués selon la proportion de la puissance d'entraînement produite par voie électro-motorisée par rapport à la puissance d'entraînement produite par le moteur à combustion interne,
- une commande d'entraînement qui commande le système d'entraînement en fonction,
- d'une demande d'entraînement définie par le conducteur,
- par l'intermédiaire,
- d'un élément de gaz, et
- du dispositif de sélection (1), et
- de différents paramètres d'état de roulement et/ou paramètres du véhicule,
- le système d'entraînement pouvant être commuté d'un mode de fonctionnement dans un autre mode de fonctionnement par l'actionnement du dispositif de sélection,
**caractérisé en ce que**
le système d'entraînement,
- est situé dans un premier mode de fonctionnement lorsque le dispositif de sélection (1) se trouve dans un premier état stable, et
- est situé dans un second mode de fonctionnement lorsque le dispositif de sélection (1) se trouve dans un second état stable,
- lors d'une commutation amorcée par la commande de l'entraînement, du système d'entraînement du second mode de fonctionnement dans le premier mode de fonctionnement sans intervention du conducteur, le dispositif de sélection passe du second état stable dans le premier état stable.

3. Véhicule hybride, conforme à la revendication 2,
**caractérisé en ce que**
le dispositif de sélection (1) comporte un levier de sélection (1) pivotant ou basculant, le premier état stable correspondant à une première position stable du levier de sélection (1) et le second état stable correspondant à une seconde position stable du levier de sélection (1).

4. Véhicule, conforme à l'une des revendications 2 et 3,
**caractérisé en ce que**
dans le premier mode de fonctionnement le système d'entraînement est entraîné en fonction de différents paramètres d'état de roulement et/ou paramètres du véhicule, uniquement par le moteur à combustion interne ou simultanément par le moteur à combustion interne et la machine électrique.

5. Véhicule, conforme à l'une des revendications 2 à 4,
**caractérisé en ce que**
dans le second mode de fonctionnement le système d'entraînement est entraîné uniquement par la machine électrique.

6. Véhicule, conforme à l'une des revendications 3 à 5,
**caractérisé en ce que**,
le levier de sélection (1) peut être commuté dans une troisième position stable, à partir de laquelle la transmission peut être graduellement commutée par actionnement du levier de sélection (1) dans une voie de changement de vitesses, pour passer, dans un rapport de vitesse supérieure ou inférieure.

7. Véhicule, conforme à la revendication 6,
**caractérisé en ce qu'**
une commutation graduellement de la transmission par actionnement du levier de sélection (1) à partir de la seconde position stable est possible.

8. Véhicule conforme à l'une des revendications 6 ou 7,
**caractérisé en ce que**
les trois positions stables sont situées les unes derrière les autres dans une voie de commutation du levier de sélection (1), le levier de sélection (1) pouvant être commuté à partir de la première position stable,
- dans la seconde position stable par déplacement du levier de sélection (1) dans une première direction, et
- dans la troisième position stable par déplacement du levier de sélection (1) dans une seconde direction opposée à la première direction ou dans une seconde direction perpendiculaire à la première direction.
